# EUROPÄISCHE PATENTANMELDUNG

(11) **EP 3 943 874 A1**
(43) Veröffentlichungstag der Anmeldung: **26.01.2022**
(21) Anmeldenummer: 21184819.7
(22) Anmeldetag: 09.07.2021
(51) Int. Cl.: F41G 3/16, F41G 9/00, F41G 3/22, F42B 12/36, B64C 27/08, B64C 39/02, F42B 1/02, G05D 1/00, F41A 23/00

(54) **WIRKMITTEL ZUR BEKÄMPFUNG EINES ZIELS**

(30) Priorität: 24.07.2020 DE 102020004487
(71) Anmelder: Diehl Defence GmbH & Co. KG, 88662 ÜBERLINGEN (DE)
(72) Erfinder: Teufert-Schulz, Alexander, 92348 Berg bei Neumarkt (DE); Ebersberger, Walter, 91056 Erlangen (DE); Schievelbein, Gunnar Ben, 90518 Altdorf (DE)
(74) Vertreter: Diehl Patentabteilung

(57) **Zusammenfassung**

Ein Wirkmittel (2) zur Bekämpfung eines Ziels (4), enthält ein unbemanntes loiterfähiges Fluggerät (6), und eine am Fluggerät (6) angebrachte, ein Projektil (8) bildende Ladung (10), die eine auf das Ziel (4) ausrichtbare Zielrichtung (12) aufweist.

Eine Wirkmitteleinrichtung (30) enthält das Wirkmittel (2) und eine zur Steuerung des Wirkmittels (2) dienende Steuereinrichtung (32), die dazu eingerichtet ist, das Wirkmittel (2) von einem Startpunkt (SP) aus in eine Bekämpfungslage (BL) für ein zu bekämpfendes Ziel (4) zu verbringen, die in einem Entfernungsbereich (20) zwischen Ladung (10) und Ziel (4) liegt, in dem das Projektil (8) eine ausreichende Bekämpfungswirkung am Ziel (4) aufweist, und die außerhalb einer Reichweite (RW) eines abstandsaktiven Schutzsystems (34) des Ziels liegt, und die Ladung (10) in der Bekämpfungslage (BL) zur Bekämpfung des Ziels (4) zu aktivieren, um das Projektil (8) in Zielrichtung (12) auf das Ziel (4) auszusenden.

## Beschreibung

Die Erfindung betrifft die Bekämpfung eines Ziels.

Militärische Bedrohungen als Ziele, insbesondere Fahrzeuge wie zum Beispiel Panzer, weisen zunehmend abstandsaktive Schutzmaßnahmen bzw. -systeme auf, wie sie zum Beispiel aus "Wikipedia, 'Abstandsaktive Schutzmaßnahmen', https:// de. wikipedia. org/ wiki/ Abstandsaktive_ Schutzmaßnahmen, Abruf am 17.06.2020" bekannt sind. Aktuelle Waffen, z. B. schultergestützte Panzerabwehrhandwaffen, stoßen durch die Einführung solcher abstandsaktiven Schutzsysteme an ihre Grenzen bei der Bekämpfung derartiger Ziele.

Aufgabe der Erfindung ist es, solche Schutzsysteme überwinden zu können, um entsprechende Bedrohungen als Ziele wirksam bekämpfen zu können.

Die Aufgabe wird gelöst durch ein Wirkmittel gemäß Patentanspruch 1 zur Bekämpfung eines potentiell mit einem abstandsaktiven Schutzsystem ausgerüsteten Ziels. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Wirkmittel enthält ein unbemanntes loiterfähiges Fluggerät. "Loiterfähig" bedeutet, dass das Fluggerät nach seinem Start und auch nach dem Erreichen eines Zielgebietes für längere Zeit, z. B. bis zu mehrere Stunden, über dem Zielgebiet manövrieren (kreisen, schweben, ...) kann, um z. B. potenzielle Ziele aufzuklären, einen konkreten Angriffszeitpunkt abzuwarten usw., siehe hierzu auch z. B. "Wikipedia, 'Loitering Weapon', https://de.wikipedia.org/ wiki/ Loitering_ Weapon, Abruf am 17.06.2020".

Das Wirkmittel enthält weiterhin eine am Fluggerät angebrachte projektilbildende, also beim Abfeuern der Ladung ein Projektil bildende, Ladung, wobei die Ladung eine auf das Ziel ausrichtbare Zielrichtung aufweist. Die Zielrichtung ist diejenige Richtung, in welche die Ladung das gebildete Projektil aussendet. Die Zielrichtung ist insbesondere mit der Ladung fest gekoppelt und relativ zu dieser unveränderlich. Die Ladung ist insbesondere unbeweglich am Fluggerät angebracht. Die Ausrichtbarkeit der Zielrichtung auf das Ziel geschieht insbesondere dadurch, dass das Fluggerät entsprechend ausrichtbar ist. Mit anderen Worten wird das Fluggerät in eine passende Position gebracht, dass damit die Zielrichtung auf das Ziel ausgerichtet ist. Eine "projektilbildende Ladung" ist eine besondere Art Hohlladung und wird auch "P-Ladung" oder "EFP" (Explosively Formed Projectile, auch Explosively Formed oder Forged Penetrator) genannt. Die projektilbildende Ladung wird in der Regel 50 bis 100 Kaliberlängen vom Ziel gezündet und ist damit von einer (klassischen) Hohlladung zu unterscheiden, welche etwa 2,5 bis 3 Kaliberlängen vom Ziel gezündet wird. Siehe hierzu z. B. "Wikipedia, Projektilbildende Ladung', https://de.wikipedia.org/wiki/ Projektilbildende_ Ladung, Abruf am 17.06.2020".

Durch die Verbringung der Ladung, also des EFP, mit dem Fluggerät kann der Zielpunkt am Ziel (Auftreffpunkt des gebildeten Projektils), insbesondere durch einen das Fluggerät steuernden Schützen, hoch präzise auf eine strukturelle Schwachstelle des Ziels, zum Beispiel die Oberseite eines Panzers, gelegt werden. Anschließend kann die Ladung in einem solchen Abstand vom Ziel gezündet werden, in dem keine abstandsaktiven Schutzsysteme (mit denen das Ziel potentiell ausgerüstet sein könnte) wirken, insbesondere also außerhalb der Reichweite dieser (insbesondere aller bekannten) Schutzsysteme. Die maximale Reichweite kann dabei auch abgeschätzt und zur Sicherheit ein entsprechend größerer Abstand gewählt werden. Durch den einer solchen Ladung bzw. einem solchen Projektil eigenen hoch beschleunigten Anflug des Projektils (Penetrators) ist davon auszugehen, dass der Regelkreis der Abwehrsysteme nicht in der Lage ist, den Angriff durch das Projektil abzuwehren. Projektile derartiger Ladungen weisen in der Regel Fluggeschwindigkeiten im Bereich von 2000 m/s auf, die entsprechenden Schutzsysteme weisen eine Reichweite von in der Regel maximal 25-30 m auf. Bei Zündung der Ladung in einem Abstand von z. B. 100m vom Ziel verbleiben dem Schutzsystem damit höchstens 0,05s, um auf den Angriff zu reagieren. Hierzu sind übliche Schutzsysteme jedoch nicht in der Lage. Durch den Treffpunkt an einer derartigen Schwachstelle, zum Beispiel der Oberseite eines Panzers, können strukturelle Schwachstellen des Ziels genutzt werden. Ein Angriff kann somit mit dem Wirkmittel erfolgreich durchgeführt werden.

In einer bevorzugten Ausführungsform ist das Fluggerät ein propellergetriebenes, also von mindestens einem Propeller angetriebenes, Fluggerät. Insbesondere ist das Fluggerät - zumindest im Flug, nicht zwangsweise auch beim Start - ausschließlich von Propellern angetrieben. Das Fluggerät ist insbesondere eine Drohne, insbesondere eine Koaxialdrohne (koaxial betriebene Propeller), insbesondere eine Stabdrohne, insbesondere mit genau zwei gegenläufigen, koaxial angeordneten Propellern. Derartige Fluggeräte sind besonders gut loiterfähig, und können unter anderem auch beliebig langsam auf ein Ziel zu bewegt oder stationär an einer stationären Ruhefluglage über einem Ziel platziert werden, was zu einer verbesserten Zielgenauigkeit, d. h. Ausrichtbarkeit der Zielrichtung auf das Ziel führt. Eine entsprechende koaxiale Stab-Drohne mit zwei gegenläufigen Propellern ist zum Beispiel als Modell "Spirit" vom Hersteller ASCENT Aerosystems bekannt (siehe z. B. "https:// ascentaerosystems.com/", Abruf am 17.06.2020).

In einer bevorzugten Ausführungsform weist das Fluggerät eine Normalfluglage auf, und die Zielrichtung der Ladung weist in der Normalfluglage lotrecht nach unten, d. h. in Schwerkraftrichtung auf die Erdoberfläche zu. Die Normalfluglage ist insbesondere eine stationäre Ruhefluglage, d. h. eine bezüglich des Ziels oder der Erdoberfläche feste Orts- bzw. Relativposition. Das Fluggerät kann so in der Normalfluglage lotrecht über dem Ziel platziert werden und das Projektil lotrecht nach unten auf das Ziel abgefeuert werden. Da Ziele wie z. B. Panzer an ihrer Oberseite in der Regel strukturelle Schwachstellen aufweisen, kann so ein Ziel besonders wirksam lotrecht von oben, und damit an dessen Oberseite bekämpft werden.

In einer bevorzugten Ausführungsform enthält das Wirkmittel mindestens ein Zielhilfsmittel zur Ausrichtung der Zielrichtung auf das Ziel. Das Zielhilfsmittel ist insbesondere ein elektrooptisches Zielhilfsmittel. So kann eine besonders zielgenaue Bekämpfung des Ziels erfolgen.

In einer bevorzugten Ausführungsform weist die Ladung einen Entfernungsbereich zwischen Ladung und Ziel auf, in dem das Projektil eine maximale Bekämpfungswirkung für das Ziel aufweist bzw. entfaltet, und der Entfernungsbereich beträgt zwischen 50 Meter und 200 Meter. Insbesondere beträgt der Entfernungsbereich zwischen 100 Meter und 150 Meter. Dieser Entfernungsbereich liegt, wie oben bereits erläutert, außerhalb der bzw. ist größer als die übliche Reichweite von abstandsaktiven Schutzsystemen. Das Wirkmittel kann somit durch diese Schutzsysteme nicht bekämpft werden, da es zum Abfeuern des Projektils außerhalb der Reichweite der Schutzsysteme platziert werden kann. Derzeit verfügbare Ladungen wiesen entsprechende Entfernungsbereiche auf, sodass diese im Wirkmittel einsetzbar sind.

In einer bevorzugten Ausführungsform weist ein durch die Ladung gebildetes Projektil eine bestimmungsgemäße Fluggeschwindigkeit von wenigstens 750 m/s auf. Insbesondere beträgt die bestimmungsgemäße Fluggeschwindigkeit wenigstens 1000 m/s, insbesondere wenigstens 1500 m/s, insbesondere wenigstens 2000 m/s. Wie oben erläutert, verbleiben somit dem abstandsaktiven Schutzsystem nur vergleichsweise kurze Zeiträume, um Gegenmaßnahmen gegen das Wirkmittel bzw. Projektil einzuleiten, sodass derzeit verfügbare Schutzsysteme nicht in der Lage sind, in diesen Zeiträumen das Wirkmittel bzw. das Projektil abzuwehren, so dass schlussendlich ein erfolgreicher Angriff auf das Ziel erfolgen kann.

In einer bevorzugten Ausführungsform ist die Ladung als entnehmbares Modul am Fluggerät angebracht, wobei das Modul gegen wenigstens ein anderes Modul bzw. andere Module als Nutzlasten des Fluggerätes austauschbar ist. So kann das Wirkmittel universell eingesetzt werden, zum Beispiel mit einer situationsadäquaten passenden bzw. speziellen Ladung, die auf ein bestimmtes Ziel abgestimmt ist oder auch mit gänzlich anderen Modulen wie zum Beispiel Aufklärungsmitteln oder einem abwerfbaren Leuchtsatz zur Markierung oder Beleuchtung eines Zielgebietes.

Die Aufgabe der Erfindung wird auch gelöst durch eine Wirkmitteleinrichtung gemäß Patentanspruch 8. Die Wirkmitteleinrichtung enthält ein Wirkmittel gemäß der Erfindung und eine zur Steuerung des Wirkmittels dienende Steuereinrichtung. Die Steuereinrichtung ist dazu eingerichtet, insbesondere durch Programmierung einer Recheneinrichtung oder Festverdrahtung, das Wirkmittel von einem Startpunkt aus in eine Bekämpfungslage bzw. -position für ein zu bekämpfendes Ziel zu verbringen. In der Bekämpfungslage ist die Zielrichtung auf das Ziel ausgerichtet. Die Bekämpfungslage befindet sich dabei in einem solchen Entfernungsbereich zwischen Ladung und Ziel, in dem das Projektil eine ausreichende, insbesondere maximale, Bekämpfungswirkung am Ziel aufweist. Ausreichend ist die Wirkung, wenn das Ziel wunschgemäß bekämpft, insbesondere zerstört, unschädlich oder unwirksam gemacht werden kann. Die Bekämpfungslage liegt außerdem außerhalb einer Reichweite eines (potentiell vorhandenen) abstandsaktiven Schutzsystems des Ziels. Dabei ist zumindest davon auszugehen, dass das Ziel potentiell über ein solches Schutzsystem verfügen könnte. Die Steuereinrichtung ist weiterhin dazu eingerichtet, die Ladung in der Bekämpfungslage zur Bekämpfung des Ziels zu aktivieren, um das Projektil in Zielrichtung auf das Ziel auszusenden. Die Steuereinrichtung ist dabei insbesondere von einem menschlichen Bediener bedienbar oder ist automatisch durch ein Ablaufprogramm steuerbar. Mit der Wirkmitteleinrichtung ist so eine vollständige Bekämpfungsmission für ein Ziel durchführbar.

In einer bevorzugten Ausführungsform ist das Wirkmittel ein solches wie oben erläutert, das nämlich mindestens ein Zielhilfsmittel zur Ausrichtung der Zielrichtung auf das Ziel enthält. Die Wirkmitteleinrichtung weist dabei eine Gegenstelle für das Zielhilfsmittel auf, so dass das Zielhilfsmittel dank der Gegenstelle zur Verbringung des Wirkmittels in die Bekämpfungslage nutzbar ist. Die Gegenstelle ist z. B. ein Monitor für eine Kamera / Radar- / Infrarotsensor als Zielhilfsmittel. Die Nutzung des Zielhilfsmittels erfolgt auch hier insbesondere entweder durch einen menschlichen Bediener oder durch ein automatisches Ablaufprogramm. Somit kann die Zielrichtung besonders genau auf das Ziel eingerichtet werden und das Projektil besonders zielgenau auf das Ziel hin abgefeuert werden.

In einer bevorzugten Ausführungsform ist das Wirkmittel ein solches wie oben erläutert, bei dem nämlich das Fluggerät eine Normalfluglage aufweist, und die Zielrichtung der Ladung in der Normalfluglage lotrecht in Schwerkraftrichtung nach unten weist. Die Steuereinrichtung ist dabei dazu eingerichtet, das Fluggerät in eine von der Normalfluglage abweichende Schräglage zu verbringen bzw. verbringen zu können, in der die Zielrichtung in einer von der Lotrechten bzw. Schwerkraftrichtung abweichenden Schrägrichtung verläuft. Die ebenfalls zur Erdoberfläche gerichtete Schrägrichtung schließt insbesondere mit der Schwerkraftrichtung einen Winkel von höchstens 90, insbesondere höchstens 60, insbesondere höchstens 45, insbesondere höchstens 30 Grad ein. Somit kann, ohne die Ortsposition des Fluggerätes ändern zu müssen, die Zielrichtung durch Schrägstellen, insbesondere durch Pendeln des Fluggerätes verändert werden. Dies ermöglicht flexible Zielrichtungen trotz starrer Montage der Ladung am Fluggerät. Besonders bei einer oben genannten koaxialen Stabdrohne mit zwei Propellern kann eine derartige Schräg- bzw. Pendellage besonders einfach und genau bewirkt werden.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Die Erfindung betrifft ein System zur Bekämpfung von Zielen, die mit unterschiedlichen Schutzkonzepten ausgerüstet sind. Die Bekämpfung erfolgt durch Verbringung eines EFP mit großem Stand-Off. Dies bedeutet, der Abstand des EFP im Moment des Abfeuerns des Projektils zum Ziel ist so groß, dass das EFP außerhalb der Reichweite der Schutzkonzepte / -maßnahmen liegt. Die Verbringung erfolgt mit einem unbemannten Fluggerät.

Die Erfindung führt insbesondere zu einem mehrrollenfähigen (verschiedene Funktionalitäten, z. B. Angriff per Ladung oder Aufklärung durch Abwurf eines Leuchtsatzes. usw.) Wirkmittel zur Bekämpfung von Kampfpanzern, die mit abstandsaktiven Schutzsystemen ausgerüstet sind.

Weitere Merkmale, Wirkungen und Vorteile der Erfindung ergeben sich aus der nachfolgenden Beschreibung bevorzugter Ausführungsbeispiele der Erfindung sowie der beigefügten Figuren. Dabei zeigt in einer schematischen Prinzipskizze:

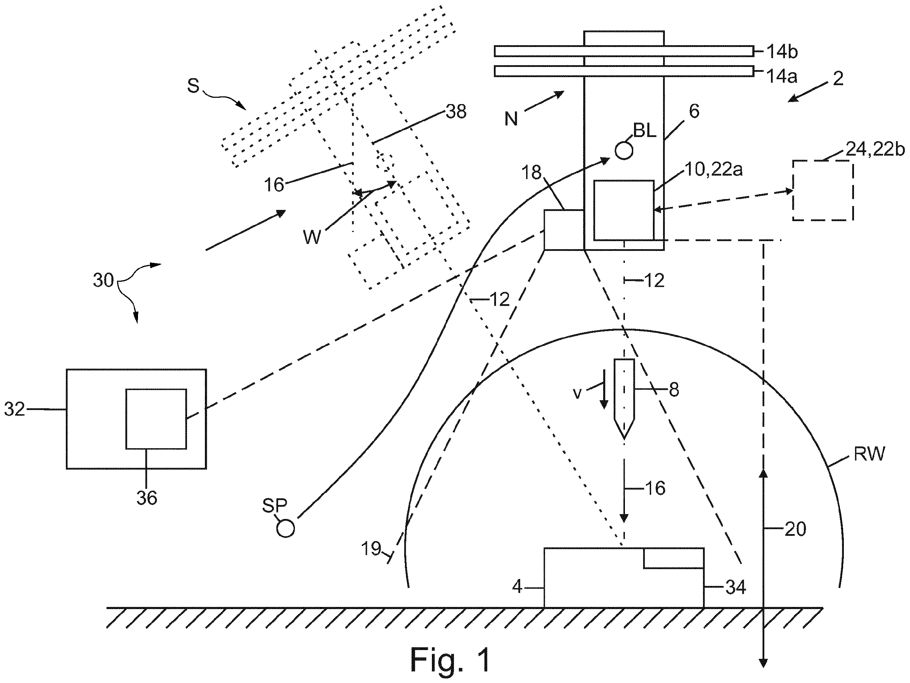

Figur 1 die Bekämpfung eines Ziels mit Hilfe eines Wirkmittels.

Figur 1 zeigt ein Wirkmittel 2, das zur Bekämpfung eines Ziels 4, hier eines Panzers, dient. Das Wirkmittel 2 umfasst ein unbemanntes, loiterfähiges Fluggerät 6, hier eine propellergetriebene Stabdrohne mit zwei koaxial ausgeführten Propellern 14a,b. An dem Fluggerät 6 ist als Teil des Wirkmittels 2 eine Ladung 10 angebracht, die bei deren Aktivierung bzw. Abfeuern ein Projektil 8 bildet bzw. in Richtung einer Zielrichtung 12 aussendet bzw. abschießt. Im Beispiel ist die Zielrichtung 12 auf das Ziel 4 ausgerichtet, so dass das Projektil 8 das Ziel 4 bekämpft. Das Wirkmittel 2 befindet sich an einer Bekämpfungsposition bzw. Bekämpfungslage BL im Luftraum über dem Ziel 4.

Figur 1 zeigt einen Betriebszustand des Fluggerätes 4, bei dem dieses sich in einer Normalfluglage N befindet. Der stabförmige Körper des Fluggerätes 6 ist dabei lotrecht zur Erdoberfläche ausgerichtet, d. h. mit seiner Mittellängsachse parallel zur Schwerkraftrichtung 16 ausgerichtet. Die Zielrichtung 12 der Ladung 10, die starr am Fluggerät 6 befestigt ist und deren Zielrichtung 12 starr an die Ladung 10 gekoppelt ist, weist dabei ebenfalls lotrecht in Schwerkraftrichtung 16 nach unten. Das Fluggerät 6 befindet sich also lotrecht über dem Ziel 4.

Das Wirkmittel 2 enthält außerdem ein Zielhilfsmittel 18, hier eine Kamera, deren Blickfeld 19 in Zielrichtung 12 ausgerichtet ist, um anhand des Kamerabildes eine Ausrichtung der Zielrichtung 12 auf das Ziel 4 zu ermöglichen.

Die Ladung 10 weist einen Entfernungsbereich 20 auf. Der Nullpunkt für die entsprechenden Entfernungen liegt bei der Ladung 10. Der Entfernungsbereich 20 beschreibt denjenigen Entfernungsbereich von der Ladung 10, in welchem das abgefeuerte Projektil 8 eine maximale Bekämpfungswirkung für Ziele 4 aufweist. Im Beispiel beträgt der Entfernungsbereich 20 100-150m. Das Ziel 4 befindet sich im Beispiel in einer Entfernung von 120 m von der Ladung 10 und liegt somit im Entfernungsbereich 20. Das Projektil 8 bewegt sich im Beispiel nach dem Abfeuern aus der Ladung 10 mit seiner bestimmungsgemäßen Fluggeschwindigkeit v von 2000 m/s.

Das Wirkmittel 2 ist hier modular ausgeführt, d. h. die Ladung 10 ist als Modul 22a austauschbar am Fluggerät 6 befestigt. Für einen, hier nur gestrichelt angedeuteten alternativen Einsatz des Fluggerätes 6 hätte das Modul 22a vor dem Start des Fluggerätes 6 auch entnommen und durch ein Modul 22b, hier einen Leuchtsatz 24, ersetzt werden können. Anstelle einer Bekämpfung des Ziels 4 hätte so das Ziel 4 und dessen Umgebung mit Hilfe des Abwerfens des Leuchtsatzes 24 auch beleuchtet werden können.

Das Wirkmittel 2 ist Teil einer Wirkmitteleinrichtung 30, die neben dem Wirkmittel 2 auch eine Steuereinrichtung 32 enthält. Letztere dient der Steuerung des Wirkmittels 2, d. h. des Fluggeräte 6 sowie der Auslösung der Ladung 10. Die Steuereinrichtung 32 ist dazu eingerichtet, d. h. befähigt, das Wirkmittel 2 ausgehend von einem Startpunkt SP in die Bekämpfungslage BL zu manövrieren. Vorliegend - nicht dargestellt - bedient hierzu ein Bediener händisch die Steuereinrichtung 32, um das Fluggerät 6 mittels eines Bedienhebels zu steuern und die Ladung 10 mittels eines Auslöseknopfes auszulösen.

Vorliegend verfügt das Ziel 4 über ein abstandsaktives Schutzsystem 34. Innerhalb einer Reichweite RW des Schutzsystems 34 kann das Ziel 4 herkömmliche Angriffsmittel, wie zum Beispiel ein von einer herkömmlichen Panzerfaust abgeschossenes Geschoss, abwehren. Vorliegend wurde das Wirkmittel 2 daher in eine Bekämpfungslage BL verbracht, die außerhalb der Reichweite RW des Schutzsystems 34 liegt, wobei jedoch wie oben erläutert beachtet wurde, dass das Ziel 4 im Entfernungsbereich 20 des Wirkmittels 2 liegt. Das Wirkmittel 2 selbst kann somit vom Schutzsystem 34 nicht erfasst werden; das abgefeuerte Projektil 8 jedoch besitzt eine derart hohe Fluggeschwindigkeit v, dass die Verweildauer des Projektils 8 innerhalb der Reichweite RW während des Angriffs nicht ausreicht, dass dem Schutzsystem 34 ausreichend Zeit für Gegenmaßnahmen gegen das Projektil 8 verbliebe. Das Ziel 4 wird daher vom Projektil 8 erfolgreich getroffen und bekämpft.

Zum Manövrieren und zur Ausrichtung der Zielrichtung 12 auf das Ziel 4 enthält die Wirkmitteleinrichtung 30 außerdem eine Gegenstelle 36 für das Zielhilfsmittel 18, hier einen Monitor, auf dem die Zielrichtung 12 als Fadenkreuz dargestellt wird. Der oben genannte Bediener nutzt die Gegenstelle 36 daher zur Platzierung des Wirkmittels 2 in der Bekämpfungslage BL.

Figur 1 zeigt gestrichelt eine alternative Vorgehensweise, um die Zielrichtung 12 auf das Ziel 4 auszurichten, wenn das Fluggerät 6 sich nicht lotrecht oberhalb des Ziels 4 befindet. In diesem Fall wird durch Ansteuerung des Fluggerätes 6 dieses in eine von der Normalfluglage N abweichende Schräglage S um eine Horizontalachse verkippt bzw. gependelt. Die Zielrichtung 12 weist nun nicht mehr in Schwerkraftrichtung 16, sondern in eine von dieser abweichende Schrägrichtung 38. Im Beispiel schließt die Schrägrichtung 38 mit der Schwerkraftrichtung 16 einen Winkel W von 45° ein, sodass das Ziel 4 in einem Winkel von 45° von oben vom Projektil 8 getroffen werden kann.

### Bezugszeichenliste

- 2: Wirkmittel
- 4: Ziel
- 6: Fluggerät
- 8: Projektil
- 10: Ladung
- 12: Zielrichtung
- 14a,b: Propeller
- 16: Schwerkraftrichtung
- 18: Zielhilfsmittel
- 19: Blickfeld
- 20: Entfernungsbereich
- 22a,b: Modul
- 24: Leuchtsatz

- 30: Wirkmitteleinrichtung
- 32: Steuereinrichtung
- 34: Schutzsystem
- 36: Gegenstelle
- 38: Schrägrichtung

- SP: Startpunkt
- BL: Bekämpfungslage
- v: Fluggeschwindigkeit
- N: Normalfluglage
- RW: Reichweite
- S: Schräglage
- W: Winkel

## Patentansprüche

1. Wirkmittel (2) zur Bekämpfung eines potentiell mit einem abstandsaktiven Schutzsystem (34) ausgerüsteten Ziels (4),
- mit einem unbemannten loiterfähigen Fluggerät (6), und
- mit einer am Fluggerät (6) angebrachten, ein Projektil (8) bildenden Ladung (10), die eine auf das Ziel (4) ausrichtbare Zielrichtung (12) aufweist.

2. Wirkmittel (2) nach Anspruch 1,
**dadurch gekennzeichnet,**
**dass** das Fluggerät (4) ein von mindestens einem Propeller (14a,b) angetriebenes Fluggerät (4) ist.

3. Wirkmittel (2) nach einem der vorhergehenden Ansprüche,
**dadurch gekennzeichnet,**
**dass** das Fluggerät (4) eine Normalfluglage (N) aufweist, und die Zielrichtung (12) der Ladung (10) in der Normalfluglage (N) lotrecht in Schwerkraftrichtung (16) nach unten weist.

4. Wirkmittel (2) nach einem der vorhergehenden Ansprüche,
**dadurch gekennzeichnet,**
**dass** das Wirkmittel (2) mindestens ein Zielhilfsmittel (18) zur Ausrichtung der Zielrichtung (12) auf das Ziel (4) enthält.

5. Wirkmittel (2) nach einem der vorhergehenden Ansprüche,
**dadurch gekennzeichnet,**
**dass** die Ladung (10) einen Entfernungsbereich (20) zwischen Ladung (10) und Ziel (4) aufweist, in dem das Projektil (8) eine maximale Bekämpfungswirkung für das Ziel (4) aufweist, und der Entfernungsbereich (20) zwischen 50m und 200m beträgt.

6. Wirkmittel (2) nach einem der vorhergehenden Ansprüche,
**dadurch gekennzeichnet,**
**dass** ein durch die Ladung (10) gebildetes Projektil (8) eine bestimmungsgemäße Fluggeschwindigkeit (v) von wenigstens 750 m/s aufweist.

7. Wirkmittel (2) nach einem der vorhergehenden Ansprüche,
**dadurch gekennzeichnet,**
**dass** die Ladung (10) als entnehmbares Modul (22a) am Fluggerät (6) angebracht ist, das gegen wenigstens ein anderes Modul (22b) als Nutzlasten des Fluggerätes (6) austauschbar ist.

8. Wirkmitteleinrichtung (30),
- mit einem Wirkmittel (2) nach einem der vorhergehenden Ansprüche, und
- mit einer zur Steuerung des Wirkmittels (2) dienenden Steuereinrichtung (32), die dazu eingerichtet ist,
- das Wirkmittel (2) von einem Startpunkt (SP) aus in eine Bekämpfungslage (BL) für ein zu bekämpfendes Ziel (4) zu verbringen, die in einem Entfernungsbereich (20) zwischen Ladung (10) und Ziel (4) liegt, in dem das Projektil (8) eine ausreichende Bekämpfungswirkung am Ziel (4) aufweist, und die außerhalb einer Reichweite (RW) eines abstandsaktiven Schutzsystems (34) des Ziels liegt,
- die Ladung (10) in der Bekämpfungslage (BL) zur Bekämpfung des Ziels (4) zu aktivieren, um das Projektil (8) in Zielrichtung (12) auf das Ziel (4) auszusenden.

9. Wirkmitteleinrichtung (30) nach Anspruch 8,
**dadurch gekennzeichnet, dass**
- das Wirkmittel (2) ein solches nach Anspruch 4 ist, und
- die Wirkmitteleinrichtung (30) eine Gegenstelle (36) für das Zielhilfsmittel (18) aufweist, so dass dieses zur Verbringung des Wirkmittels (2) in die Bekämpfungslage (BL) nutzbar ist.

10. Wirkmitteleinrichtung (30) nach einem der Ansprüche 7 bis 8,
**dadurch gekennzeichnet, dass**
- das Wirkmittel (2) ein solches nach Anspruch 3 ist, und
- die Steuereinrichtung (32) dazu eingerichtet ist, das Fluggerät (6) in eine von der Normalfluglage (N) abweichende Schräglage (S) zu verbringen, in der die Zielrichtung (12) in einer von der Schwerkraftrichtung (16) abweichenden Schrägrichtung (38) verläuft.
